(19) Europäisches Patentamt
European Patent Office
Office européen des brevets

(11) Publication number: **0 414 202 B1**

(12) **EUROPEAN PATENT SPECIFICATION**

(45) Date of publication of patent specification: **15.11.95**

(51) Int. Cl.$^{6}$: **C08L 23/10**, C08J 5/18

(21) Application number: **90115976.4**

(22) Date of filing: **20.08.90**

(54) **Novel extruded polypropylene films and sheets.**

(30) Priority: **24.08.89 JP 216060/89**
**24.08.89 JP 216061/89**

(43) Date of publication of application:
**27.02.91 Bulletin 91/09**

(45) Publication of the grant of the patent:
**15.11.95 Bulletin 95/46**

(84) Designated Contracting States:
**BE DE FR GB IT NL**

(56) References cited:
**EP-A- 0 195 505**
**EP-A- 0 249 342**

(73) Proprietor: **MITSUI TOATSU CHEMICALS, Inc.**
**2-5 Kasumigaseki 3-chome**
**Chiyoda-Ku**
**Tokyo 100 (JP)**

(72) Inventor: **Asanuma, Tadashi**
**4-1-133, Toriishi 3-chome**
**Takaishi-shi,**
**Osaka-fu (JP)**
Inventor: **Shiomura, Tetsunosuke**
**4-22-1-304, Yoyogi,**
**Shibuya-ku**
**Tokyo (JP)**
Inventor: **Kimura, Shigeru**
**14-1-26, Ayazono 2-chome**
**Takaishi-shi,**
**OSaka-fu (JP)**
Inventor: **Inoue, Takeo**
**1731-238, Kidocho**
**Kawachinagano-shi,**
**Osaka-fu (JP)**
Inventor: **Uchikawa, Nobutaka**
**21-4, Higashi Hagoromo 6-chome**
**Takaishi-shi,**
**Osaka-fu (JP)**

(74) Representative: **Schüler, Horst, Dr.**
**Patentanwalt,**
**Kaiserstrasse 69**
**D-60329 Frankfurt (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

Background of the Invention

1. Field of the Invention

The present invention relates to novel extruded film or sheet formed by the extrusion of a syndiotactic polypropylene having a syndiotactic pentad fraction of 0,7 or more, or a syndiotactic propylene copolymer containing not more than 20 wt.% of olefin units other than propylene units, said olefin units containing 2 - 25 carbon atoms, and the peak intensity of said propylene copolymer observed at 20.2 ppm on $^{13}C$-NMR absorption spectrum as measured in the form of a 1,2,4-trichlorobenzene solution while using tetramethylsilane as a standard being at least 0.5 of the sum of all peak intensities corresponding to the respective methyl groups of propylene.

2. Description of the Related Art:

Syndiotactic polypropylene itself has been known for many years. However, syndiotactic polypropylene obtained by low-temperature polymerization in the presence of a conventional catalyst, which comprised a vanadium compound, ether and an organoaluminum compound had low syndiotacticity and was hardly considered to have the characteristic properties of a syndiotactic polypropylene.

J.A. Ewen et al has found for the first time that polypropylene having tacticity greater than 0.7 in terms of syndiotactic pentad fraction as measured by $^{13}C$-NMR can be obtained by polymerizing propylene in the presence of a polymerization catalyst formed of a transition metal (Hf and Zr) compound having an asymmetrical ligand and methylaluminoxane [J. Amer. Chem. Soc., 110, 6255-6 (1988)].

Isotactic polypropylene has a wide range of utility and according EP-A- 0249 342 it can be used for the production of extruded sheets and films. These sheets and films have relatively good physical properties but involve the problem that they are insufficient in transparency. There has hence been a long-standing demand for extruded polypropylene sheets and blown films, having better transparency.

Summary of the Invention

An object of the present invention is therefore to provide novel extruded polypropylene films and sheets, which have extremely good transparency and relatively good strength.

Other objects of the present invention will become apparent from the following description.

In one aspect of the present invention, there are thus provided extruded films or sheets formed by the extrusion of a polypropylene substantially having a syndiotactic structure.

The extruded polypropylene substantially having the syndiotactic structure may be a film or sheet having a thickness of 0.005-5 mm or a blown film having a thickness of 0.001-1 mm.

Description of the Preferred Embodiments

The term "syndiotactic polypropylene" embraces propylene homopolymer and copolymers of propylene and other olefins having 2-25 carbon atoms. Examples of the olefins other than propylene include ethylene; and olefins having 4-20 carbon atoms and represented by the formula: $CH_2=CH-R$ in which R is a linear or branched alkyl group having 2-18, preferably 2-12 carbon atoms, including specifically linear olefins such as butene-1, pentene-1, hexene-1, heptene-1, octene-1, nonene-1, decene-1, undecene-1, dodecene-1, tridecene-1, pentadecene-1, hexadecene-1, heptadecene-1 and octadecene-1, and branched olefins such as 3-methylbutene-1, 4-methyl-pentene-1, 4,4-dimethylpentene-1. Recurring units derived from these olefins may amount to 20 wt.% or less, preferably 0-15 wt.% of the corresponding copolymers. These copolymers can provide extruded films and sheets which still have improved transparency.

The propylene homopolymers substantially having the syndiotactic structure have a syndiotactic pentad fraction of at least 0.7, notably at least 0.8 as measured by $^{13}C$-NMR in the form of a solution in 1,2,4-trichlorobenzene. Further, the propylene copolymers substantially having the syndiotactic structure have a peak intensity, which is observed at about 20.2 ppm on a $^{13}C$-NMR absorption spectrum as measured in the form of a 1,2,4-trichlorobenzene solution while using tetramethylsilane as a standard, of at least 0.5, especially at least 0.6 of the sum of all peak intensities corresponding to the respective methyl groups of propylene. Propylene homopolymer whose syndiotactic pentad fraction is smaller than 0.7 does not have sufficient characteristics as crystalline polypropylene, and its physical properties are poor. Such polypropylene homopolymer is therefore not preferred. Propylene copolymers whose peak intensity ratios as defined above are smaller than 0.5 have not only poor physical properties but also problems such that articles extruded from them have sticky surfaces.

The molecular weight of the propylene homopolymer or copolymer substantially having the syndiotactic structure may be preferably 0.1-10, more preferably 0.5-5.0, most preferably 0.5-3.0 as an intrinsic viscosity measured at 135 °C in the form of a tetralin solution. Further, the ratio Mw/Mn of the weight average molecular weight (Mw) of the above homopolymer or copolymer to its number average molecular weight (Mn), both measured at 135 °C by gel permeation chromatography, may preferably range from 1.5 to 15.

As a production process for the propylene homopolymer or copolymer substantially having the syndiotactic structure, the above-described process of J.A. Ewen et al. may be mentioned by way of example. Any catalysts other than those proposed by Ewen et al. can be used as long as they can provide syndiotactic polypropylene having a syndiotactic pentad fraction 0.7 or more as a result of polymerization of propylene alone.

The polymerization processes featuring the use of the catalysts described above can also be applied for the production of copolymers of propylene and other olefins.

Among the processes for obtaining propylene homopolymer or copolymers, it is the process featuring the use of a polymerization catalyst composed of a transition metal compound, which contains an asymmetric ligand, and an aluminoxane that can give propylene homopolymer and copolymers having a syndiotactic structure of relatively good tacticity. Examples of the transition metal compound containing an asymmetric ligand include isopropyl(cyclopentadienyl-1-fluorenyl)hafnium dichloride, isopropyl-(cyclopentadienyl-1-fluorenyl)zirconium dichloride, and those obtained by replacing one or two of the chlorine atoms with other halogens or $C_{1-5}$ alkyl groups.

Illustrative of the aluminoxane include compounds represented by:

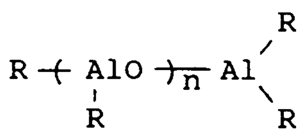

or

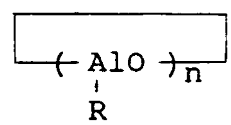

wherein R represents a $C_{1-3}$ hydrocarbon residue. In particular, compounds in which R is a methyl group and n is at least 5, especially 10-100 are employed preferably.

The aluminoxane may be used in an amount of 10-1,000,000, preferably 50-5,000 molar times the amount of the associated transition metal compound.

No particular limitation is imposed on the conditions for the polymerization. The polymerization can be conducted by solution polymerization in a known inert solvent, by bulk polymerization in a polymerization system substantially free of any inert solvent, or by gas-phase polymerization.

Usually, the polymerization temperature may range from -100 °C to 200 °C while the polymerization pressure ranges from normal pressure to 100 $kg/cm^2$-G. Polymerization at from -100 °C to 100 °C under from normal pressure to 50 $kg/cm^2$-G is particularly preferred.

By polymerizing propylene alone or propylene and another olefin in the presence of the polymerization catalyst under the polymerization conditions, the above-described propylene homopolymer or copolymer can be obtained.

To further improve the syndiotacticity fraction of the homopolymer or copolymer, it is effective to wash the homopolymer or copolymer with a hydrocarbon solvent having 3-20 carbon atoms. Examples of the hydrocarbon solvent include propylene itself, saturated hydrocarbons such as propane, butane, pentane, hexane, heptane, octane and nonane, aromatic hydrocarbon compounds such as benzene, toluene, xylene and ethylbenzene, and those obtained by partly or entirely replacing their hydrogen atoms with fluorine, chlorine, bromine and/or iodine atoms. Other usable solvents include those capable of either dissolving or dispersing low molecular-weight atactic components such as alcohols having 1-20 carbon atoms, ethers having 2-20 carbon atoms, and esters. No particular limitation is imposed on the manner of washing. The washing is generally conducted at 0-100 °C.

Polymerization at a relatively low temperature, generally 100 °C or lower in the presence of a catalyst having high purity, normally 90% or higher is also effective for obtaining homopolymer or copolymers having a high syndiotacticity fraction.

The propylene homopolymer or copolymer obtained by the above-described process and having a syndiotactic structure may be blended with one or more of various known additives, for example, antioxidants, lubricants, ultraviolet absorbers, ultraviolet stabilizers, heat stabilizers, antistatic agents, organic

or inorganic pigments. The resultant composition is optionally granulated, followed by extrusion into various articles. No particular limitation is imposed on the method of extrusion, and various known methods can be employed. To obtain a film and sheet by way of example, there is employed an apparatus which comprises an ordinary extruder and a die having a profile required for obtaining the desired sheet and fitted on the extruder. The thickness of the invention film and sheet obtained as described above may preferably range from 0.005 mm to 5 mm. It is preferred to add a nucleating agent to the propylene homopolymer or copolymer of the syndiotactic structure before extrusion and/or to cool the thus-extruded film and sheet in a special manner, because such propylene homopolymer or copolymer has a relatively low crystallization velocity. The extruded film may also be used as a material for secondary processing such as biaxial stretching or pressure/vacuum forming.

Preferred exemplary nucleating agents include metal salts of aromatic monocarboxylic acids such as benzoic acid, toluic acid, and p-tert-butylbenzoic acid; dibenzylidenesorbitols such as 1,3•2,4-di-(benzylidene)sorbitol, 1,3•2,4-di(p-methylbenzylidene)sorbitol, and 1,3•2,4-di(p-ethylbenzylidenc)sorbitol: metal salts of aromatic phosphoric acid compounds, such as sodium bis(4-tertbutylphenyl)phosphate and sodium methylenebis(2,4-ditert-butylphenol)phosphate; high molecular weight compounds having a high melting point, such as polyvinylcyclohexane, poly-3-methylbutene, crystalline polystyrene and polytrimethylvinylsilane; and quinacridones such as 2,3-quinacridone, dihydroxyquinacridone and acetylated quinacridone. Further, inorganic compounds such as talc, kaolin and mica can also be used preferably. These nucleating agents can be used either singly or in combination.

As a preferred method for cooling an extruded film and sheet, it is sufficient to bring the film or sheet into close contact with conventional cooling rolls. Here, the cooling temperature may be suitably controlled. For a thick sheet, cooling can be carried out using a medium having a large heat capacity such as water.

To produce a blown film of the present invention, it is possible to apply, as is, a process widely used for the production of blown polyolefin films. Namely, a composition obtained by adding desired additives to the above-described propylene homopolymer or copolymer is extruded in a cylindrical form. An inert gas such as nitrogen is blown into the cylindrical extrudate, whereby the cylindrical extrudate is stretched. The thus-stretched cylindrical extrudate is flattened by guide plates and is then taken up on pinch rolls. To extrude the composition in the cylindrical form, there is employed an apparatus constructed by fitting a circular die on a conventional extruder. Upon practice of the blow-film extrusion, various techniques known to those skilled in the art can also be used as desired. The thickness of the blown film of this invention obtained as described above may generally range from 0.001 mm to 1 mm.

Other extruded articles of the present invention, for example, tubes, rods and extruded articles having miscellaneous profiles can be produced similarly by methods well known to artisans. Production processes for these various molded articles are described in detail, for example, in "Oshidashi Seikei (Extrusion)", Chief Editor: Kenkichi Murakami, Kabushiki Kaisha Plastic Age.

In the present invention, the propylene homopolymer or copolymer substantially having a syndiotactic structure can be replaced partly, for example, to an extent less than 50 wt.%, preferably up to 40 wt.% by a propylene homopolymer or copolymer having an isotactic structure. If the proportion of the latter propylene homopolymer or copolymer becomes 50 wt.% or higher, the impact strength is reduced. The latter propylene homopolymer or copolymer can be produced by any one of suitable known processes. One having an isotactic pentad fraction of at least 0.9 as measured by $^{13}C$-NMR can be used preferably. Extruded articles having high stiffness can be obtained by substituting a propylene homopolymer or copolymer having an isotactic structure for a part of a propylene homopolymer or copolymer substantially having a syndiotactic structure.

The present invention will hereinafter be described in further detail by examples and comparative examples.

Example 1

In an autoclave having an internal capacity of 200 ℓ, were charged 0.2 g of isopropyl(cyclopentadienyl-1-fluorenyl)zirconium dichloride - which had been obtained by converting, into a lithium salt, isopropylcyclopentadienyl-1-fluorene, synthesized by a method known *per se*, reacting the salt with zirconium tetrachloride and then recrystallizing the reaction product -, 30 g of methylaluminoxane (polymerization degree: 16.1) produced by TOSO-AKUZO CORPOPATION, and 80 ℓ of toluene. Propylene was then charged to a gauge pressure of 4bar (3 kg/cm$^2$-G),followed by polymerization at 20 °C for 2 hours.

After completion of the polymerization, unreacted propylene was purged. To remove inorganic matter, the polymerization mixture was washed with a mixed solvent which consisted of 40 ℓ of methanol and 0.2 ℓ of methyl acetoacetate. The thus-washed mixture was then washed further with 10 ℓ of 3 wt.% hydrochloric

acid. The polymerization mixture washed as described above was filtered, whereby 5.6 kg of syndiotactic polypropylene were obtained. The syndiotactic pentad fraction of the polypropylene was 0.935 as measured by $^{13}C$-NMR, the intrinsic viscosity as measured at 135 °C in the form of a tetralin solution was 1.45, and its Mw/Mn value as measured in 1,2,4-trichlorobenzene was 2.2.

The polypropylene was blended with 0.1 wt.% of 2,6-di-tert-butyl-p-cresol as a stabilizer and 0.1 wt.% of talc as a nucleating agent and then granulated. By an apparatus consisting of an extruder having a barrel diameter of 40 mm and a downward die fitted on the extruder, a sheet having a width of 400 mm and a thickness of 0.5 mm was produced at 210 °C and a screw speed of 100 rpm. With respect to the above sheet, the following physical properties were measured.

| Physical property | Unit | Measuring method |
|---|---|---|
| Haze | % | ASTM D-1003 |
| Stress at yield $N/mm^2$ | ($kg/cm^2$) | ASTM D-638 |
| Elongation at break | % | ASTM D-638 |
| Tensile modulus $N/mm^2$ | ($kg/cm^2$) | ASTM D-638 |

The sheet had 15.5% haze, 24,6 $N/mm^2$ (246 $kg/cm^2$)stress at yield, 677% elongation at break, 590 $N/mm^2$ (5900 $kg/cm^2$)tensile modulus.

Comparative Example 1

A sheet was produced in a similar manner to Example 1 except for the use of a commercial isotactic polypropylene which had an isotactic pentad fraction of 0.980 as measured by $^{13}C$-NMR, an intrinsic viscosity of 2.20 as measured at 135 °C in the form of a tetralin solution and an Mw/Mn ratio of 5.5 as measured in 1,2,4-trichlorobenzene. The sheet had 58.7% haze, 32,6$N/mm^2$(326 $kg/cm^2$)stress at yield, 954 % elongation at break, and 1070 $N/mm^2$ (10700 $kg/cm^2$)tensile modulus. The strength was good but the transparency was poor.

Comparative Example 2

A sheet was produced in a similar manner to Example 1 except for the use of a commercial propylene-ethylene copolymer having an ethylene content of 4.2 wt.% as measured by $^{13}C$-NMR, an intrinsic viscosity of 2.26 as measured at 135 °C in the form of a tetralin solution and an Mw/Mn ratio of 5.5 as measured in 1,2,4-trichlorobenzene. In a $^{13}C$-NMR spectrum of the copolymer, the intensity of an absorption corresponding to the methyl groups of chain units, each consisting of five successive propylene groups arranged as ...mmmm..., was 0.931 of the intensity of an absorption corresponding to the whole methyl groups. The sheet had 36.5% haze, 22,7 $N/mm^2$ (227 $kg/cm^2$)stress at yield, 912 % elongation at break, and 440 $N/mm^2$ (4400 $kg/cm^2$) tensile modulus. The sheet was better in transparency than the sheet of Comparative Example 1, but inferior in both strength and transparency to the sheet of Example 1.

Example 2

Polymerization was conducted in a similar manner to Example 1 except that the polymerization pressure and temperature were changed to 2 bar (1 $kg/cm^2$-G)and 5 °C, whereby a syndiotactic polypropylene was obtained having a syndiotactic pentad fraction of 0.915 as measured by $^{13}C$-NMR, an intrinsic viscosity of 1.71 as measured at 135 °C in the form of a tetralin solution and an Mw/Mn ratio of 1.9 as measured in 1,2,4-trichlorobenzene. The sheet had 12.5% haze, 26,6 $N/mm^2$ (266 $kg/cm^2$) stress at yield, 720 % elongation at break, and 610 $N/mm^2$ (6100 $kg/cm^2$) tensile modulus.

Example 3

In an autoclave having an internal capacity of 200 ℓ, were charged 0.1 g of isopropyl(cyclopentadienyl-1-fluorenyl)hafnium dichloride - which had been obtained by converting, into a lithium salt, isopropylcyclopentadienyl-1-fluorene, synthesized by a method known *per se*, reacting the salt with hafnium tetrachloride (content of zirconium tetrachloride: 5 wt.%) and then recrystallizing the reaction product -, 0.1 g of isopropyl(cyclopentadienyl-1-fluorenyl)-zirconium dichloride (synthesized in the same manner as in Example 1 and purified by recrystallization), 30 g of methylaluminoxane (polymerization degree: 16.1;

product of TOSO-AKUZO CORPORATION), 4 ℓ of hexene-1, and 80 ℓ of toluene. Propylene was then charged to a gauge pressure of 4 bar (3 kg/cm$^2$-G),followed by polymerization at 20 °C for 2 hours.

After completion of the polymerization, the polymerization mixture was treated in a similar manner to Example 1 so that a copolymer having a hexene-1 unit content of 6 wt.% was obtained. According to $^{13}$C-NMR, the peak intensity of the copolymer at about 20.2 ppm was 0.68 of the whole peak intensity of the methyl groups of the propylene units. This indicated that the copolymer substantially had a syndiotactic structure. Its Mw/Mn ratio was 4.5.

The copolymer was added with the same additives as those employed in Example 1. By a similar extrusion procedure to Example 1, a sheet having a thickness of 0.5 mm was produced from the copolymer. Its physical properties were measured. The following results were obtained.

| | |
|---|---|
| Haze: | 8% |
| Stress at yield: | (140 kg/cm$^2$) 14 N/mm$^2$ |
| Elongation at break: | 580% |
| Tensile modulus: | 2,300 kg/cm$^2$ 230 N/mm$^2$ |

Example 4

Using a blown-film extruder having a barrel diameter of 40 mm ("BDTK-40S", trade name; manufactured by Kawata Seisakusho K.K.), a blown film having a thickness of 0.005 mm was produced at a resin temperature of 240 °C, a coolant water temperature of 20 °C, a take-up speed of 4 m/min, an extruder temperature of 220 °C and a die temperature of 210 °C from the same syndiotactic polypropylene composition as that employed for the production of the sheet in Example 1. The following physical properties were measured.

| Physical property | Unit | | Measuring method |
|---|---|---|---|
| Haze | % | | ASTM D-1003 |
| Impact strength | kg•cm/mm | | Mitsui-Toatsu method* |

* Under a load, a ball having a diameter of ½ inch is caused to strike a 10 cm by 10 cm square film of a desired thickness in accordance with the principle of the pendulum to determine the breaking energy at break of the film. The impact strength of the film is calculated in accordance with the following formula:

$$\text{Impact strength (kg•cm/mm)} = \frac{\text{Breaking energy (kg•cm)}}{\text{Film thickness (mm)}}$$

| | | | |
|---|---|---|---|
| Young's modulus | N/mm$^2$ | kg/cm$^2$ | ASTM D-882 |
| Stress at yield | N/mm$^2$ | kg/cm$^2$ | ASTM D-882 |

The blown film had 3.7% haze, 80 kg•cm/mm (23 °C) and 16 kg•cm/mm (-5 °C) impact strength, (73 kg/cm$^2$) 7,3 N/mm$^2$ Young's modulus, and o,223 N/mm$^2$ (2.23 kg/cm$^2$)stress at yield.

Comparative Example 3

A blown film was produced in a similar manner to Example 4 except for the use of an ordinary isotactic polypropylene which had an isotactic pentad fraction of 0.980 as measured by $^{13}$C-NMR, an intrinsic viscosity of 1.52 as measured at 135 °C in the form of a tetralin solution and an Mw/Mn ratio of 4.8 as

measured in 1,2,4-trichlorobenzene. The blown film had 5.0% haze, 78 kg•cm/mm (23°C) and 1.5 kg•cm/mm (-5°C) impact strength, 8,0 N/mm$^2$ (80 kg/cm$^2$)Young's modulus, and 0,231 N/mm$^2$ (2.31 kg/cm$^2$) stress at yield. The tensile strength was substantially unchanged, but the haze and low-temperature impact strength were inferior.

Comparative Example 4

A blown film was produced in a similar manner to Example 4 except for the use of a commercial propylene-ethylene copolymer having an ethylene content of 2.3 wt.% as measured by $^{13}$C-NMR, an intrinsic viscosity of 1.57 as measured at 135°C in the form of a tetralin solution and an Mw/Mn ratio of 5.3 as measured in 1,2,4-trichlorobenzene. In a $^{13}$C-NMR spectrum of the copolymer, the intensity of an absorption corresponding to the methyl groups of chain units, each consisting of five successive propylene groups arranged as ...mmmm..., was 0.965 of the intensity of an absorption corresponding to the whole methyl groups. The blown film had 5.0% haze, 82 kg•cm/mm (23°C) and 18 kg•cm/mm (-5°C) impact strength, 6,2 N/mm$^2$ (62 kg/cm$^2$)Young's modulus, and o,201 Nmm$^2$ 2.01 kg/cm$^2$ stress at yield. The low-temperature impact strength was improved, but the tensile strength was inferior and the haze was poor.

Example 5

In a similar manner to Example 4, a blown film was produced using the same syndiotactic polypropylene as that employed in Example 2.

The blown film had 3.8% haze, 85 kg•cm/mm (23°C) and 24 kg•cm/mm (-5°C) impact strength, (77 kg/cm$^2$)7,7 N/mm$^2$ Young's modulus, and 0,231 N/mm$^2$ (2.31 kg/cm$^2$)stress at yield.

Example 6

In a similar manner to Example 4, a blown film was produced using the same syndiotactic propylene-hexene-1 copolymer as that employed in Example 3.

The blown film had 1.8% haze, 95 kg•cm/mm (23°C) and 35 kg•cm/mm (-5°C) impact strength,(32 kg/cm$^2$) 3,2 N/mm$^2$ Young's modulus, and 0,195 N/mm$^2$ (1.95 kg/cm$^2$)stress at yield.

Example 7

The procedure of Example 1 was repeated except that 30 parts by weight of a commercial isotactic polypropylene having an isotactic pentad fraction of 0.962 as measured by $^{13}$C-NMR and an intrinsic viscosity $\eta$ of 1.62 as measured at 135°C in tetralin were mixed to 70 parts by weight of the syndiotactic polypropylene obtained in Example 1. The resulting sheet had 5.2% haze, 26,5 N/mm$^2$ (265 kg/cm$^2$)stress at yield, 650% elongation at break, and 710N/mm$^2$ (7100 kg/cm$^2$) tensile modulus.

Example 8

Using a polypropylene composition similar to that employed in Example 7, a blown film was produced in a similar manner to Example 4. The blown film had 3.8% haze, 75 kg•cm/mm (23°C) and 16 kg•cm/mm (-5°C) impact strength, 7,6 N/mm$^2$ (76 kg/cm$^2$)Young's modulus, and (2.25 kg/cm$^2$) 0,225 N/mm$^2$ stress at yield.

**Claims**

**1.** An extruded film or sheet formed by the extrusion of a syndiotactic propylene homopolymer having a syndiotactic pentad fraction of 0.7 or more or a syndiotactic propylene copolymer having a syndiotactic pentad fraction of at least 0.5 and containing not more than 20 wt.% of olefin units other than propylene units, said olefin units containing 2-25 carbon atoms, the syndiotactic pentad fraction is the ratio of a peak intensity of methyl groups of propylene attributed to a syndiotactic pentad observed at 20.2 ppm on $^{13}$C-NMR absorption spectrum on the basis of tetramethylsilane as measured in a 1,2,4-trichlorobenzene solution to the sum of all peak intensities attributed to the respective methyl groups of propylene.

**2.** An extruded film or sheet according to claim 1 which is a sheet having a thickness of 0.005 - 5 mm.

3. An extruded film or sheet according to claim 1 which is a blown film having a thickness of 0.001 - 1 mm.

4. An extruded film or sheet according to claim 3 which is a blown film formed by extruding propylene homopolymer in a cylindrical form and blowing an inert gas into the cylindrical extrudate.

5. An extruded film or sheet according to claim 2 which is a high-transparency sheet formed by the extrusion of a propylene homopolymer.

## Patentansprüche

1. Ein extrudierter Film oder eine extrudierte Folie, die durch das Extrudieren eines syndiotaktischen Propylenhomopolymeren mit einer syndiotaktischen Pentadfraktion von 0,7 oder mehr oder eines syndiotaktischen Propylencopolymeren mit einer syndiotaktischen Pentadfraktion von wenigstens 0,5 und nicht mehr als 20 Gew.-% andere Olefineinheiten als Propyleneinheiten enthaltend gebildet werden, wobei die Olefineinheiten 2-25 Kohlenstoffatome enthalten und die syndiotaktische Pentadfraktion das Verhältnis einer Peak-Intensität von Methylgruppen von Propylen, die dem syndiotaktischen Pentad zuzuordnen sind, die bei 20,2 ppm auf einem $^{13}C$-NMR-Absorptionsspektrum auf der Basis von Tetramethylsilan, gemessen in einer 1,2,4-Trichlorbenzollösung, beobachtet wird, zu der Summe aller Peak-Intensitäten, die den jeweiligen Methylgruppen von Propylen zuzuordnen sind, ist.

2. Ein extrudierter Film oder eine extrudierte Folie nach Anspruch 1, die jeweils eine Folie mit einer Dicke von 0,005 - 5 mm sind.

3. Ein extrudierter Film oder eine extrudierte Folie nach Anspruch 1, die jeweils ein geblasener Film mit einer Dicke von 0,001 - 1 mm sind.

4. Ein extrudierter Film oder eine extrudierte Folie nach Anspruch 3, die jeweils ein geblasener Film sind, der durch Extrudieren von Propylenhomopolymer in einer zylindrischen Form und Einblasen eines inerten Gases in das zylindrische Extrudat gebildet worden ist.

5. Ein extrudierter Film oder eine extrudierte Folie nach Anspruch 2, die jeweils eine hochtransparente Folie sind, die durch das Extrudieren eines Propylenhomopolymeren gebildet worden ist.

## Revendications

1. Film ou feuille extrudés formés par extrusion d'un homopolymère de propylène syndiotactique ayant une fraction pentadique syndiotactique de 0,7 ou plus ou d'un copolymère de propylène syndiotactique ayant une fraction pentadique syndiotactique d'au moins 0,5 et ne contenant plus plus de 20 % en poids de motifs d'oléfine autres que les motifs de propylène, lesdits motifs d'oléfine contenant 2 à 25 atomes de carbone, la fraction pentadique syndiotactique est le rapport d'une intensité de pic des groupes méthyles du propylène attribué à une pentade syndiotactique, observé à 20,2 ppm sur le spectre d'absorption de $^{13}C$-RMN par rapport au tétraméthylsilane, mesuré en solution dans le 1,2,4-trichlorobenzène, à la somme des intensités de tous les pics attribués aux groupes méthyles respectifs du propylène.

2. Film ou feuille extrudés selon la revendication 1 qui est une feuille ayant une épaisseur de 0,005 à 5 mm.

3. Film ou feuille extrudés selon la revendication 1, qui est un film soufflé ayant une épaisseur de 0,001 à 1 mm.

4. Film ou feuille extrudés selon la revendication 3, qui est un film soufflé formé par extrusion d'homopolymère de propylène sous une forme cylindrique et insufflation d'un gaz inerte dans l'extrudat cylindrique.

5. Film ou feuille extrudés selon la revendication 2, qui est une feuille très transparente formée par extrusion d'un homopolymère de propylène.